Europäisches Patentamt

(19) European Patent Office

Office européen des brevets

(11) Publication number: **0 117 131**
**A2**

(12) # EUROPEAN PATENT APPLICATION

(21) Application number: **84301000.0**

(22) Date of filing: **16.02.84**

(51) Int. Cl.³: **B 60 N 1/08**

(30) Priority: **16.02.83 GB 8304265**

(43) Date of publication of application:
**29.08.84 Bulletin 84/35**

(84) Designated Contracting States:
**AT BE CH DE FR GB IT LI LU NL SE**

(71) Applicant: **HOCKLEY DESIGN SERVICES LIMITED**
**Lloyds Bank Chambers 69 Southend Road**
**Hockley Essex, SS5 4QJ(GB)**

(72) Inventor: **Fowler, James Alfred**
**43 Woodpond Avenue**
**Hockley Essex(GB)**

(74) Representative: **Geldard, David Guthrie et al,**
**URQUHART-DYKES AND LORD 11th Floor, Tower House**
**Merrion Way**
**Leeds, LS2 8PB West Yorkshire(GB)**

(54) **Longitudinal slide mechanism for a vehicle seat.**

(57) A longitudinal slide mechanism for a vehicle seat comprises first and second elongate members (12) relatively slidable along their longitudinal axes. The cross-sections of the members are such that they cannot be separated in any direction transverse to the longitudinal axes, and means (31) are provided for locking the members against longitudinal movement in any one of a plurality of positions.

Fig. 5.

EP 0 117 131 A2

Croydon Printing Company Ltd.

— 1 —

## LONGITUDINAL SLIDE MECHANISM FOR A VEHICLE SEAT

This invention relates to longitudinal slide mechanisms for vehicle seats, the mechanism enabling the occupant to adjust the position of the seat fore and aft relative to a vehicle.

A number of such mechanisms are known, generally comprising first and second elongate members relatively slidable along their longitudinal axes, and locking means for locking the members against longitudinal movement in any one of a plurality of positions. There is always a need, however, to render such mechanisms stronger and in particular to prevent the two members becoming separated in an accident situation, so breaking anchorage of the seat in the vehicle, with consequent danger to the occupant.

According to the present invention we provide a mechanism as aforesaid in which the first member has a central web, two side webs each extending substantially at right angles from a respective side of the central web, each side web terminating in an interlock section comprising a first part extending substantially at right angles from the side web, a second part extending substantially at right angles from the first part towards the plane of the central web and a third part extending substantially at right angles from the second part towards the adjacent side web; the second member has a central web, two side webs each extending substantially at right angles from a respective side of the central web, each side web terminating in an interlock section comprising a first part extending substantially at right angles from the side web, a second part extending substantially at right angles from the first part towards the central web and a third part extending substantially at right angles to the second part towards the respective side web; the third part of each of the interlocking sections of one of the members is received between the first and third parts of the adjacent interlocking section of the other of the members; and the interlocking sections are of constant cross-section throughout the length of the members.

The mechanism exhibits higher resistance to separation than previously used slide mechanisms due to the fact that in an impact situation the interlock arrangement effects positive trapping of part of one of the members to the other, so rendering it capable of resisting even very high forces tending directly to separate the two members one from another.

The elongate members of the mechanism of the invention may be arranged as upper and lower members, one being secured to a seat and the other to the floor of a vehicle, the central webs lying substantially horizontal. Alternatively the mechanism may be mounted on its side, the central webs then being disposed substantially vertically, one of the members being secured to the seat and the other to the floor of the vehicle.

Preferably each interlocking section of the first member also has a fourth part extending substantially at right angles from the third part and a fifth part extending substantially at right angles from the fourth part towards the plane of the second part. This formation provides additional strength.

In order to facilitate adjustment of the two members relative one to the other the mechanism desirably includes spaced roller assemblies either disposed between the central web of one of said members and the first parts of the interlocking sections of the other of said members, or disposed between the side webs of one of the members and the respective adjacent second parts of the interlock sections of the other of the members. The first said disposition of the rollers is designed for use when the central webs are horizontal and the second for when the central webs are vertical. Each roller assembly conveniently comprises rollers at each side of the mechanism, the rollers being captive in a common carrier.

The carrier may be used to enhance the interlocking by comprising a plate lying adjacent to the central web of one of said members and parallel to and between the first and second members, the plate having at each side thereof a side portion extending substantially at right angles to the plate and lying between the side web of the member to which the plate is adjacent and the second part of the interlocking section of the member from which the plate is remote. Each side portion of the plate desirably terminates in a flange extending inwardly towards the longitudinal axis of the mechanism and lying between respective parts of the interlocking sections of the two members. By having this close interlocking fit of the roller assembly plate, not only is relative movement between the two members more firmly prevented, but the plates and rollers of each roller assembly are prevented from vibrating between the two members to cause unwanted noise.

It is particularly preferred if one side web of one of the members is provided with a series of holes engageable by elements of a locking member that is pivoted to the other of the members. Locking is thus effected within the overall confines of the two members, rather than having to use a locking rack positioned externally of the interengaging slides as is currently common practice.

The invention will be better understood from the following description of particular embodiments thereof, given by way of example only, with reference to the accompanying drawings in which:-

Figure 1 is an isometric view of a first embodiment of seat slide according to the invention;

Figure 2 is an isometric view of one member of the assembly of Figure 1;

Figure 3 is a cross-section on the line III-III;

Figure 4 is an exploded view of parts of the mechanism of Figure 1;

Figure 5 is a section on the line V-V of Figure 1;

Figures 6 and 7 are plan and elevation views respectively of a second embodiment of slide mechanism according to the invention;

Figure 8 is a section on the line VIII-VIII of Figure 6; and

Figures 9 and 10 are cross-sections of two further embodiments of slide mechanism according to the invention.

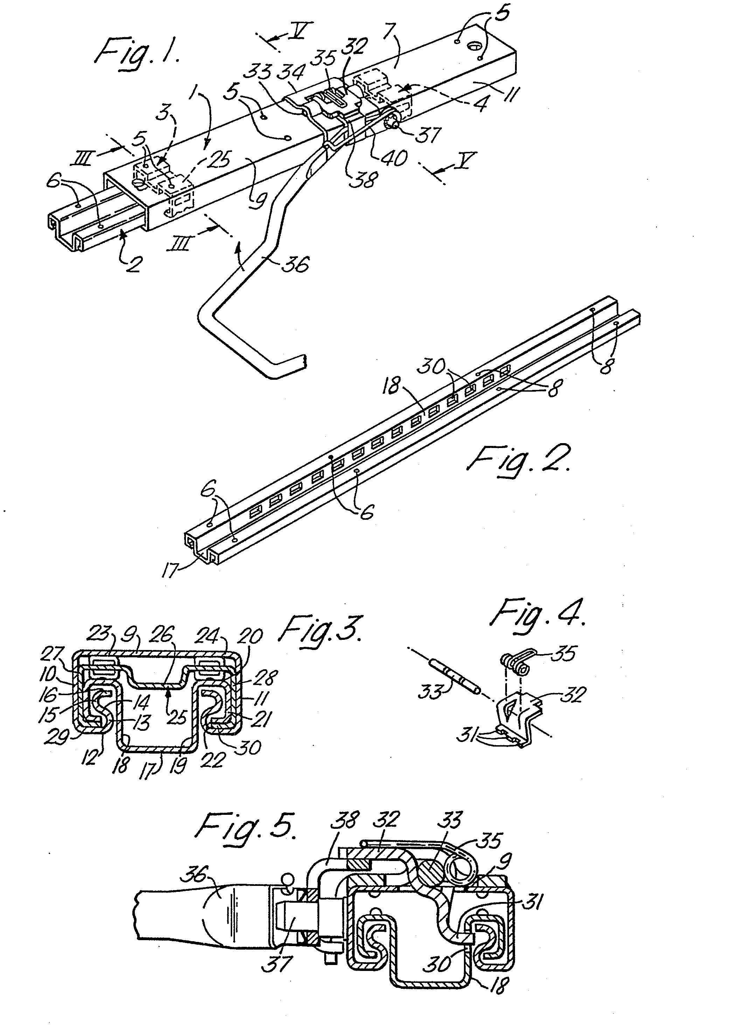

Referring to Figures 1 to 3 a longitudinal slide mechanism for a vehicle seat comprises a first, upper elongate member 1 and a second, lower elongate member 2. The upper member is designed to be secured to a vehicle seat, while the lower member is designed to be secured to the floor of the vehicle or to brackets by way of which the member may be secured to the vehicle floor. The two members are supported for relative sliding movement by two longitudinally spaced roller assemblies 3, 4, the assembly 3 being capable of movement between inwardly projecting stops 5 on the upper member and 6 on the lower member and the roller assembly 4 being similarly movable between inwardly projecting stops 7 on the upper member and 8 on the lower member.

The upper and lower members are shown in cross-section in Figure 3. The upper member has an upper web 9 and two side webs 10, 11 one depending from each side of the upper web substantially at right angles thereto. Each side web terminates in an interlocking section, the two sections being similar but of opposite hand. Accordingly only the interlock section associated with the side web 10 will be described in detail. This interlock section comprises a first part 12 extending substantially at right angles from the side web inwardly towards the longitudinal centre line of the member, a second part 13 extending substantially at right angles to and upwardly from the first part towards the plane of the upper web 9, a third part 14 extending substantially at right angles to and outwardly from the second part towards the associated side web 10, a fourth part 15 extending substantially at right angles to and upwardly from the third part towards the upper web 9 and a fifth part 16 extending substantially at right angles
to and inwardly from the fourth part towards the
longitudinal axis.

The lower member has a lower web 17 and two side
webs 18 and 19 each upstanding from a respective side
of the lower web. Each side web terminates in an
interlock section, and again the interlock section
of each side web is the same as that of the other web
except for being of opposite hand. Accordingly, only
the interlock section associated with side web 19
will be described in detail. This section comprises
a first part 20 extending substantially at right
angles to and outwardly from the side web 19 away from
the longitudinal centre line of the meber, a second
part 21 extending substantially at right angles to
and downwardly from the first part and a third part 22
extending substantially at right angles to and inwardly
from the second part towards the side web 19. From a
study of Figure 3 there will be appreciated the very
effective interlock produced by the described
configuration, acting to prevent separation of the
two members in any direction transverse to the
longitudinal axes with part of one side member,in an accident,
becoming almost inextricably locked into the other
member and crushed between parts of the other member.

Each of the roller assemblies 3 and 4 comprises
two rollers 23, 24, one at each side of the mechanism,
the two rollers being held captive in a common carrier
25. The carrier comprises a plate 26 lying below the
upper web of the upper member and between the upper and
lower members, the plate having at each side thereof
a depending side portion 27, 28 respectively lying
between the adjacent side web of the upper member and
the second part of the adjacent interlocking section
of the lower member. The lower part of each of the
side portions 27 and 28 is formed with a flange 29, 30 respectively extending inwardly towards the longitudinal axis and lying between the first part of the interlocking section of the upper member and the third part of the interlocking section of the lower member. The roller assemblies are thus firmly held between the upper and lower members and prevented from vibration between the upper and lower members.

As will be seen from Figure 2 the side web 18 of the lower member 17 is formed with a series of longitudinally spaced holes such as 30. The holes are engageable by projections 31 (Figure 4) of a locking plate 32 mounted on the upper member 1 to pivot about a pivot pin 33. The pivot pin is secured in position on the upper member 1 by a saddle 34 welded or otherwise secured to the upper member 1. A spring 35 cooperating with the saddle and the locking plate 32 biases the locking plate into a position such that the projections 31 engage the holes 30.

A locking release lever 36 is pivotally mounted on the side web 11 of the upper member 1 about a pivot stud 37 welded to the side member. The lever has a tongue 38 engaging beneath part of the locking plate 32 and the lever is biased by a spring 40 to a position wherein the tongue 38 lies in contact with the upper web 9 of the upper member. To release the lock the lever 36 is pivoted upwardly as indicated by the arrow in Figure 1 about the pivot 37, whereupon the tongue 38 lifts the plate 32 to pivot it about the pin 33 against the biasing force of the spring 35 and withdraw the projections 31 from the holes 30. With the lever held in the upward position the upper member may be slid longitudinally relative to the lower member to a new position of adjustment, the lever then being released so that the projections 31 engage in the adjacent holes 30.

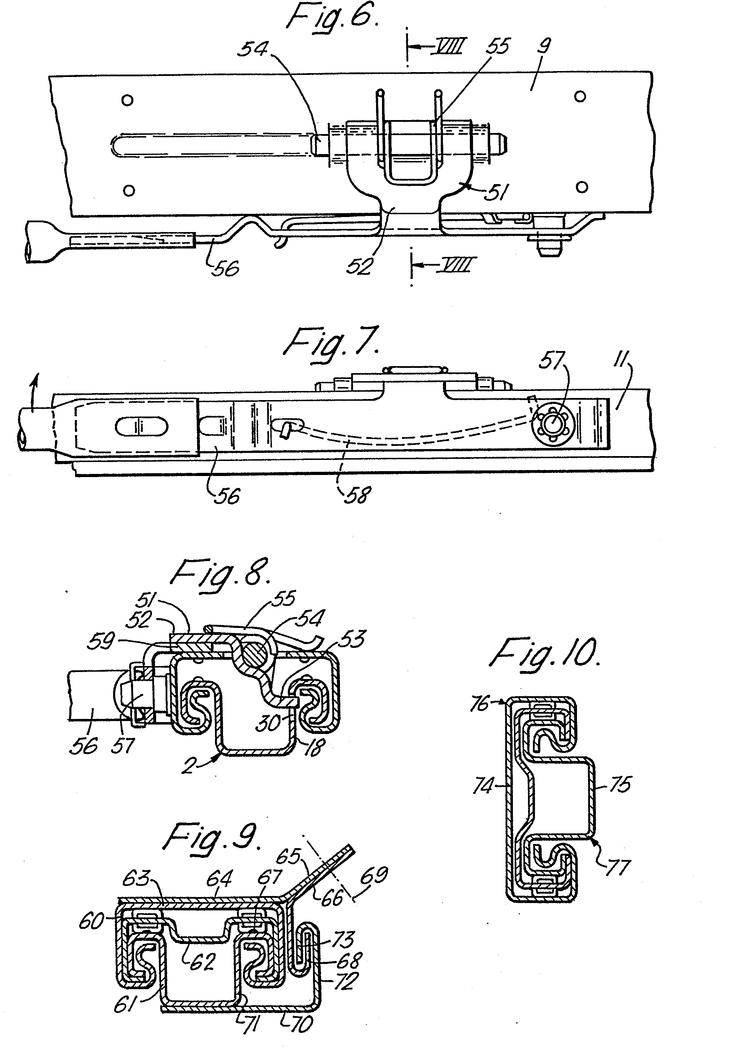

Figures 6 to 8 show an alternative form of locking mechanism. This incorporates a locking plate 51 having a tongue 52 and terminating in locking tabs 53 engageable with respective ones of the holes 30 in the web 18 of the lower member 2. The plate 51 engages a pivot pin 54 which is fixed into a formed well on the upper web 9 of the upper member. A spring 55 is coiled around the pivot and has parts bearing on the upper web 9 and on the plate 51 in order to bias the plate into the locking position as shown in Figure 7. An operating lever 56 is pivoted to the side web 11 about a pivot pin 57 and is biased into its lowermost position as seen in Figure 6 by a spring 58. The lever has a section 59 engaged beneath the tongue 52 of the locking plate. Accordingly, when the lever is raised in the direction of the arrow as seen in Figure 6 the part 59 lifts the tongue and so pivots the locking plate about the pivot 54 to remove the tabs 53 from the holes 30. The upper member can thus be longitudinally adjusted on the lower member and release of the lever enables the locking elements to re-engage in the newly adjusted position.

Figure 9 shows one method by which seat belt anchorage to the slide assembly of Figure 1 may be effected. The two side members and the roller assembly are shown generally as 60, 61 and 62 and have the section shown in Figure 3. Welded to the central web 63 of upper slide 60 is a plate 64 having an extension 65 at approximately 45° to the plane of the web 63. A further plate 66 is welded to the extension 65 and has a depending section 63 lying adjacent to the slide member 60 and terminating in an outwardly and upwardly turned section 68. Parts 65 and 66 are drilled on axis 69 to receive a seat belt anchorage. A further plate 70, having a length equal to the length of the relative slide path between the slide members 60 and 61, is welded to the central web 71 of the lower slide 61.

The plate 70 has an upwardly extending section 72 terminating in an inwardly and downwardly turned section 73 engaging with the section 68. It will be seen that in a sideways impact situation the sections 68 and 73 will be compressed and locked together so improving retention of the seat belt anchorage in position in the vehicle.

Figure 10 shows the cross-section of a slide assembly similar to that of Figure 3 but modified for mounting with the central webs 74, 75 of the two slide members 76, 77 lying substantially vertical. Rollers 78, 79 are disposed between the side webs 78, 79 of the member 76 and the second parts 80, 81 of the interlocking sections of the member 77. The rollers are captive in a carrier 82 located between the two slide members. One of the slide members will be secured to the seat, the other to the vehicle floor, and a suitable locking arrangement will of course be incorporated.

It will be appreciated that the slide arrangements shown in either Figure 3 or Figure 10 may be inverted or changed hand for hand from the disposition shown. It will further be understood that cross-sections other than those specifically illustrated may be used, and that locking arrangements other than those disclosed may be incorporated.

CLAIMS:

1. A longitudinal slide mechanism for a vehicle seat, the mechanism comprising first and second elongate members relatively slidable along their longitudinal axes, and locking means for locking the members against longitudinal movement in any one of a plurality of positions, in which the first member has a central web, two side webs each extending substantially at right angles from a respective side of the central web, each side web terminating in an interlock section comprising a first part extending substantially at right angles from the side web, a second part extending substantially at right angles from the first part towards the plane of the central web and a third part extending substantially at right angles from the second part towards the adjacent side web; the second member has a central web, two side webs each extending substantially at right angles from a respective side of the central web, each side web terminating in an interlock section comprising a first part extending substantially at right angles from the side web, a second part extending substantially at right angles from the first part towards the central web and a third part extending substantially at right angles to the second part towards the repective side web; the third part of each of the interlocking sections of one of the members is received between the first and third parts of the adjacent interlocking section of the other of the members; and the interlocking sections are of constant cross-section throughout the length of the members.

2. A mechanism according to claim 1 in which each interlocking section of the first member also has a fourth part extending substantially at right angles from the third part and a fifth part extending substantially at right angles from the fourth part towards the plane of the second part.

3. A mechanism according to claim 1 or claim 2 and including spaced roller assemblies disposed between the central web of one of said members and the first parts of the interlocking sections of the other of said members, the roller assemblies supporting the two members for relative longitudinal movement.

4. A mechanism according to claim 1 or claim 2 and including spaced roller assemblies disposed between the side webs of one of the members and the respective adjacent second parts of the interlock sections of the other of the members, the roller assemblies supporting the two members for relative longitudinal movement.

5. A mechanism according to claim 3 or claim 4 in which each roller assembly comprises rollers at each side of the mechanism, the rollers being captive in a common carrier.

6. A mechanism according to claim 5 in which the carrier comprises a plate lying adjacent to the central web of one of said members and parallel to and between the first and second members, the plate having at each side thereof a side portion extending substantially at right angles to the plate and lying between the side web of the member to which the plate is adjacent and the second part of the interlocking section of the lower member from which the plate is remote.

7. A mechanism according to claim 6 in which each side portion of the plate terminates in a flange ; extending inwardly towards the longitudinal axis of the mechanism and lying between respective parts of the interlocking sections of the two members.

8. A mechanism according to any of claims 1 to 7 in which one side web of one of the members is provided with a series of holes engageable by elements of a locking member that is pivoted to the other of the members.

0117131

Fig. 1.

Fig. 2.

Fig. 3.

Fig. 4.

Fig. 5.

*Fig.6.*

*Fig.7.*

*Fig.8.*

*Fig.10.*

*Fig.9.*